Europäisches Patentamt

European Patent Office

Office européen des brevets

(11) Veröffentlichungsnummer: **0 000 708**
**B1**

(12) **EUROPÄISCHE PATENTSCHRIFT**

(21) Anmeldenummer: **78100409.8**

(22) Anmeldetag: **17.07.78**

(51) Int. Cl.³: **B 65 G 57/18**

(54) **Stapelvorrichtung für stab- oder brettförmiges Stückgut**

(30) Priorität: **03.08.77 DE 2735469**

(43) Veröffentlichungstag der Anmeldung:
**21.02.79 Patentblatt 79/04**

(45) Bekanntmachung des Hinweises auf die Patenterteilung:
**23.07.80 Patentblatt 80/15**

(84) Benannte Vertragsstaaten:
**BE CH DE FR GB LU NL SE**

(56) Entgegenhaltungen:
**CH - A - 554 796**
**DE - A - 1 808 973**
**DE - A - 2 020 441**
**DE - B - 1 198 286**
**DE - B - 2 553 724**
**DE - C - 467 927**
**FR - A - 1 414 053**
**NL - A - 7 109 892**
**NL - A - 7 202 343**
**US - A - 3 737 053**

(73) Patentinhaber: **Heinz Schiepe**
**Grosshandel und**
**Generalvertretung**
**Haynauerstrasse 72a-74**
**D - 1000 Berlin 46 (DE)**

(72) Erfinder: **Schiepe, Heinz**
**Haynauer-Strasse 72a-74**
**D - 1000 Berlin 46 (DE)**
**Pfeiffer, Ulrich**
**Bernauer-Strasse 108-a**
**D - 1000 Berlin 49 (DE)**

(74) Vertreter: **Albrecht, Hans, Dipl.Ing.**
**Gelfertstrasse 56**
**D - 1000 Berlin 33 (DE)**

Courier Press, Leamington Spa, England.

Stapelvorrichtung für stab- oder brettförmiges Stückgut

Die Erfindung bezieht sich auf eine Stapelvorrichtung für stab- oder brettförmiges Stückgut, mit an Ständern vertikal verfahrbaren Stapelwagen mit horizontal verfahrbaren Tragarmen und mit Festanschläge aufweisenden, parallel geführt umlaufenden Mitnehmern, die das Stückgut auf der Rückseite der Ständer aufnehmen und auf eine auf der Oberseite der Ständer befindliche Ablagefläche ablegen.

Stapelvorrichtungen dieser Art sind aus den deutschen Patentschriften 1 191 296, 1 235 808, 2 445 536 und 2 553 724 bekannt. Bei diesen bekannten Stapelvorrichtungen wird das auf der Rückseite der Ständer von einem Mitnehmer vertikal aufwärts transportierte Stückgut auf der, auf der Oberseite der Ständer befindlichen Ablagefläche einzeln abgelegt und vom nachfolgenden Mitnehmer mittels dessen Festanschlag zum Weitertransport mitgenommen. Der Weitertransport des Stückgutes erfolgt auf der Vorderseite der Ständer. Hier wird das vereinzelte Stückgut abwärts gefördert, bis es auf die ausgefahrenen Tragarme der Stapelwagen abgesetzt und auf diesen einzeln zur Bildung einer Stapelreihe verschoben wird. Sobald eine Stapelreihe die gewünschte Breite erreicht hat, werden die Tragarme zurück und die Stapelwagen um die Höhe einer Stapelreihe vertikal verfahren, woraufhin dann die Tragarme zur Bildung der nächsten Stapelreihe wieder ausgefahren werden.

Es wurde festgestellt, dass die Arbeitsgeschwindigkeit dieser bekannten Stapelvorrichtungen, insbesondere die Umlaufgeschwindigkeit der Mitnehmer um die Ständer, abhängig ist von der Zeit, die für den Lagenwechsel erforderlich ist, d.h. für den Zeitraum, der zum Einfahren der Tragarme, Anheben der Stapelwagen und Wiederausfahren der Tragarme erforderlich ist. Da in diesem Zeitraum ein Ablegen von Stückgut auf die Tragarme nicht möglich ist, muss die Umlaufgeschwindigkeit der Mitnehmer derart eingestellt werden, dass in diesem Zeitraum kein Stückgut zum Ablegen ankommot.

Bei den bekannten Stapelvorrichtungen besteht darüber hinaus ein weiterer Nachteil darin, dass die Mitnehmer auch auf der Vorderseite aus den Ständern herausragen und hier durch herabgefallenes Stückgut beim Abwärtsgang verklemmt werden können, woraufhin Brüche, insbesondere in den Verbindungsstellen zwischen Mitnehmern und den diese tragenden Ketten auftreten können.

Schliesslich besteht ein weiterer Nachteil darin, dass die Ständer relativ hoch gebaut werden müssen, damit das Stückgut über Magazine für Zwischenleisten geführt werden kann, die gegebenenfalls an den Stapelwagen unmittelbar angebracht und mit diesen vertikal verfahrbar sind.

Der Erfindung liegt demgegenüber die Aufgabe zugrunde, eine Stapelvorrichtung der eingangs genannten Art zu schaffen, bei welcher die Umlaufgeschwindigkeit der Mitnehmer weitgehend unabhängig vom Lagenwechsel eingestellt und damit gegenüber herkömmlichen Stapelvorrichtungen erhöht werden kann, bei welcher die Gefahr von Verklemmungen der Mitnehmer beim Abwärtsgang vermieden ist und bei welcher eine geringere Bauhöhe möglich ist.

Zur lösung dieser Aufgabe sieht die Erfindung vor, dass die Länge der Ablagefläche der Breite einer zu bildenden Stapelreihe entspricht, dass das abgelegte Stückgut mittels der Festanschläge auf der Ablagefläche zu einer Stapelreihe zusammengeschoben wird, wobei die Festanschläge so geführt sind, dass diese am Anfang der Ablagefläche in die Ständer eintauchen, und dass die Stapelwagen mit eingefahrenen, über deren Oberkante hinausragenden Tragarmen zum Abnehmen der Stapelreihe unter die Ablagefläche vertikal verfahrbar und mit der Stapelreihe nach dem Ausfahren der Tragarme absenkbar sind, um die Stapelreihe durch Einziehen der Tragarme abzusetzen.

Bei der erfindungsgemässen Stapelvorrichtung ist die Umlaufgeschwindigkeit der Mitnehmer im wesentlichen unabhängig von der Zeit, die für einen Lagenwechsel erforderlich ist, da bei der erfindungsgemässen Stapelvorrichtung die Stapelreihe zeitlich parallel zum Lagenwechsel gebildet wird. Die Bildung der Stapelreihe erfolgt erfindungsgemäss auf der mindestens die Breite einer Stapelreihe aufweisenden Ablagefläche auf der Oberseite der Ständer, auf welche das vereinzelt geförderte Stückgut nacheinander mittels der Festanschläge der Mitnehmer gefördert wird. Jeder Festanschlag eines jeden Mitnehmers taucht an der gleichen Stelle der Ablagefläche in den Innenraum der Ständer ein, so dass die rückwärtige Kante eines jeden abzulegenden Brettes oder dgl. an der gleichen Stelle zu liegen kommt. Somit schiebt jedes neuangekommene Brett die davor befindlichen Bretter um eine Brettbreite auf der Ablagefläche nach vorn, um so die gewünschte Stapelreihe zu bilden.

Die fertig gebildete Stapelreihe wird unmittelbar nach dem Aufschieben des letzten Brettes der Stapelreihe vom eingefahrenen Tragarm des vertikal verfahrenen Stapelwagens angehoben und durch Ausfahren des Tragarmes und Absenken des Stapelwagens von der Ablagefläche entfernt, auf welcher unverzüglich nach dem Abheden der Stapelreihe eine neue Stapelreihe gebildet werden kann.

Während der Bildung der nächstfolgenden Stapelreihe wird die vorangegangene Stapelreihe auf dem gewünschten Stapel abgelegt, so dass keine Verlustzeit für den Lagenwechsel auftritt.

Durch das Eintauchen der Mitnehmer zusammen mit ihren Festanschlägen in das Innere der Ständer, wodurch die Mitnehmer nicht über die vordere Fläche der Ständer herausragen, ist jegliche Gefahr von Verklemmungen der abwärtsbewegten Mitnehmer vermieden.

Wenn ein Stapeln mit Zwischenleisten gewünscht wird, so können diese unmittelbar auf die auf der Ablagefläche befindliche Stapelreihe aufgelegt werden, wobei sich die Leistenmagazine oberhalb der Ablagefläche befinden. Dadurch kann die Bauhöhe der einzelnen Ständer erheblich vermindert werden, so dass geringere Fertigungskoten erzielbar sind.

Die Festanschläge können einseitig am vorderen Ende oder im mittleren Bereich der Mitnehmer angeordnet sein, so dass das von einem Mitnehmer auf der Ablagefläche abgelegte Brett erst vom nächstfolgenden Mitnehmer in die gewünschte Stapelreihe geschoben wird. In weiterer Ausbildung der Erfindung können die Festanschläge auch am hinteren Ende der Mitnehmer angeordnet sein. Hierdurch schiebt jeder Festanschlag das vom zugeordneten Mitnehmer geförderte Brett unmittelbar in die Stapelreihe.

Die Verbindung der Mitnehmer mit zwei parallel geführten Ketten erfolgte bisher mit jeweils einem Bolzen eines Kettengliedes einer jeden der beiden Ketten. Dies hat durch Überlastung zu Brüchen geführt. Erfindungsgemäss ist nunmehr vorgesehen, dass jeder Mitnehmer mit je einem Glied der beiden parallel geführten Ketten über Drehstücke verbuden ist, die im Mitnehmer drehbar, aber seitlich unverscheibbar gelagert und mit beiden Bolzen des jeweiligen Kettengliedes starr verbunden sind. Hierdurch ergibt sich eine grössere Festigkeit in der Verbindung der Mitnehmer mit den zugehörigen Ketten. Beim Umlenken der Ketten um die Kettenräder werden die Drehstücke innerhalb der Mitnehmer verdreht, so dass die Mitnehmer immer mit ihrer oberen Fläche in einer im wesentlichen horizontalen Lage verbleiben.

Zum Zurückziehen der Tragarme beim Ablegen einer Stapelreihe ist erfindungsgemäss an den Stapelwagen je eine Rückhaltevorrichtung angeordnet. Weiterhin sind Fotozellen zur Steuerung der Stapelwagen in Abhängigkeit von der Oberkante der zuletzt abgelegten Stapelreihe und Stückzahl - sowie Lagenzähler vorgesehen.

Die Erfindung ist nachfolgend anhand eines in der Zeichnung dargestellten Ausführungsbeispieles näher erläutert. Es zeigen:

Fig. 1 eine Seitenansicht eines Ständers mit davor gebildetem Stapel,

Fig. 2 eine Prinzipdarstellung der Ketten-Umlaufförderer für die Mit nehmer in einer Draufsicht auf einen Ständer,

Fig. 3 eine Prinzipdarstellung des Bewegungsablaufes der Stapelvorrichtung,

Fig. 4 ein Detail IV in Fig. 1 in vergrösserter Darstellung und anderer Ausführungsform und

Fig. 5 einen Schnitt gemäß Linie V - V in Fig. 4,

Fig. 6 einen Schnitt gemäß Linie VI - VI in Fig. 4.

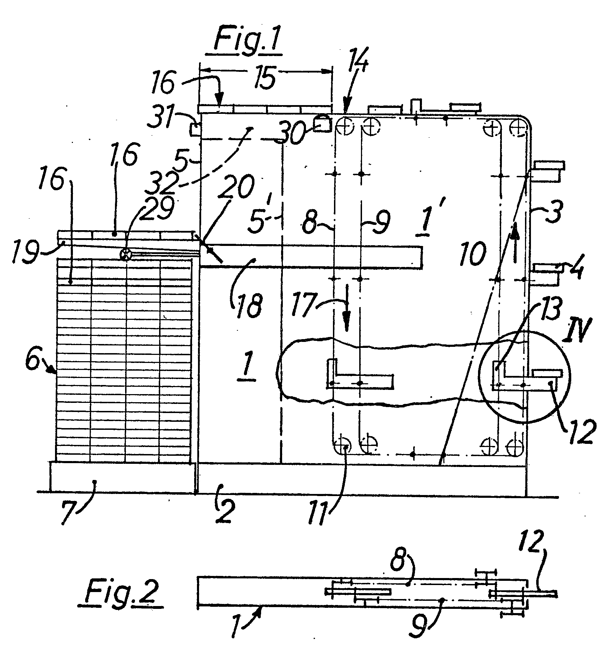

Eine Stapelvorrichtung für stab- oder brettförmiges Stückgut umfasst regelmässig mindestens zwei Ständer 1, die in einem Abstand zueinder auf einem Gestellrahmen 2 verschiebbar angeordnet sind. Die Stapelvorrichtung hat die Aufgabe, die auf der Rückseite 3 von nicht näher dargestellten Zuführeinrichtungen ankommenden Bretter 4 (oder anderes stab- oder brettförmiges Stückgut) auf der Vorderseite 5 in einem Stapel 6 auf einer Palette 7 sauber zu stapeln. Hierzu weist der Ständer 1 in seinem Inneren zwei umlaufende Ketten 8, 9 auf die in Längsrichtung des Ständers 1 versetzt, und in Querrichtung parallel zueinander angeordnet sind, wie es aus den Fig. 1 und 2 ersichtlich ist. Die Ketten 8, 9 werden über nicht näher dargestellte Antriebe in Richtung des Pfeiles 10 angetrieben und laufen um in Eckpunkten angeordnete Kettenräder 11 herum. Zwischen den parallel zueinander angeordneten Ketten 8, 9 sind Mitnehmer 12 mit Festanschlägen 13 in weiter unten beschriebener Weise angeordnet, die zusammen mit den Ketten 8, 9 in Richtung des Pfeiles 10 umlaufen.

Jeder Mitnehmer 12 fördert ein Brett 4 auf der Rückseite 3 der Ständer 1 nach oben auf die als Ablagefläche 14 ausgebildete Oberseite der Ständer 1. Die Ablagefläche 14 erstreckt sich mindestens um die Breite 15 einer zu bildenden Stapelreihe 16 über die vom Festanschlag 13 eines jeden Mitnehmers 12 auf der Oberseite der Ständer 1 durchlaufene Strecke hinaus. Die Ablagefläche 14 wird dabei von der Oberseite der Ständer 1 gebildet und kann durch eine entsprechende Gleitschiene ausgeführt sein. Die vom Festanschlag 13 auf der Oberseite der Ständer 1 durchlaufene Strecke ist genau begrenzt durch den Beginn der Abwärtsbewegung der Mitnehmer entlang der Ketten 8, 9 entsprechend dem Pfeil 17. Wenn in nicht näher dargestellter Weise einstellbare Festanschläge 13 auf den Mitnehmern 12 vorgesehen sind, so kann der Eintauchzeitpunkt der Festanschläge 13 in die Oberfläche der Ablagefläche 14 verändert werden.

In der dargestellten Ausführungsform werden die Bretter 4 mittels der Mitnehmer 12 auf die Ablagefläche 14 gefördert, dort abgelegt und erst vom Festanschlag 13 des nachfolgenden Mitnemhers 12 in die gewünschte Stapelreihe 16 geschoben.

Wie es aus der Fig. 1 ersichtlich ist, erhält der Ständer 1 eine Breite, die etwa dem 1, 5 fachen der Breite des Kettenantriebes 8, 9 entspricht. Erforderlichenfalls kann die Rückseite 3 der Ständer 1 entsprechend der gestrichelten Linie abgeschrägt werden, so dass die Mitnehmer 12 entlang der abgeschrägten Rückseite 3 geführt werden. Entsprechend kann die Vorderseite 5 unterhalb der Ablagefläche 14 nach innen versetzt werden.

Sobald eine Stapelreihe 16 auf der Ablagefläche 14 der Ständer 1 gebildet ist, werden die an Gleitführungen der Ständer 1 geführten Stapelwagen 18 mittels nicht näher dargestellter Antriebe mit eingefahrenen, über die Oberkante der Stapelwagen 18 hinausragenden Tragarmen 19 zum Abheben der Stapelreihe 16 unter die Ablagefläche 14 vertikal verfahren und mit der Stapelreihe 14 nach dem Ausfahren der Tragarme 19 auf den Stapel 6 abgesenkt, um hier die Stapelreihe 16 durch Einziehen der Tragarme 19 abzusetzen. Anschliessend verfahren die Tragarme 19 wieder in vertikaler Richtung zur Abnahme der zwischenzeitlich gebildeten neuen Stapelreihe.

An den Stapelwagen 18 können Rückhaltevorrichtungen 20 für die auf den Tragarmen 19 befindliche, abzulegende Stapelreihe 16 angeordnet sein. Die Rückhaltevorrichtung 20 kann als Klinke, einfacher Sperrhebel oder dgl. ausgebildet sein. Auch die Vorderseite 5 der Ständer 1 kann als Rückhalter dienen.

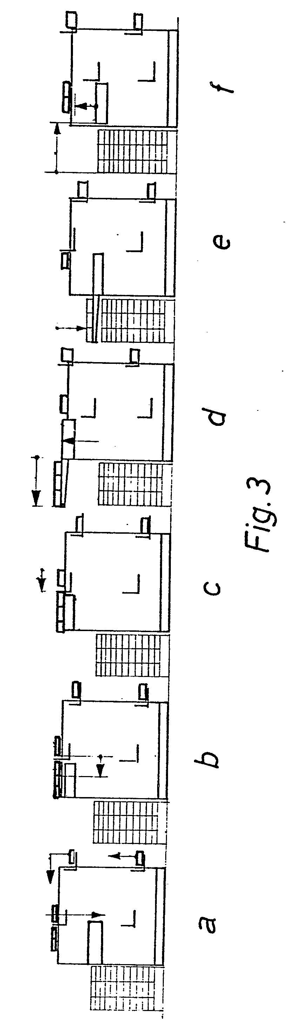

In der Fig. 3 ist ein Stapel - zyklus dargestellt. In Fig. 3 a wird gerade eine neue Stapelreihe gebildet, während der Stapelwagen 18 die vorhergehende Stapelreihe abgelegt hat. In Fig. 3b ist die neue Stapelreihe fertig, der Stapelwagen 18 ist vertikal verfahren. In Fig. 3c wird die neue Stapelreihe gerade angehoben. In Fig. 3d ist die Stapelreihe 16 auf den Tragarm 19 ausgefahren und wird in Fig. 3e abgesenkt und abgesetzt, während in Fig. 3f die nächstfolgende Stapelreihe wieder gebildet wird.

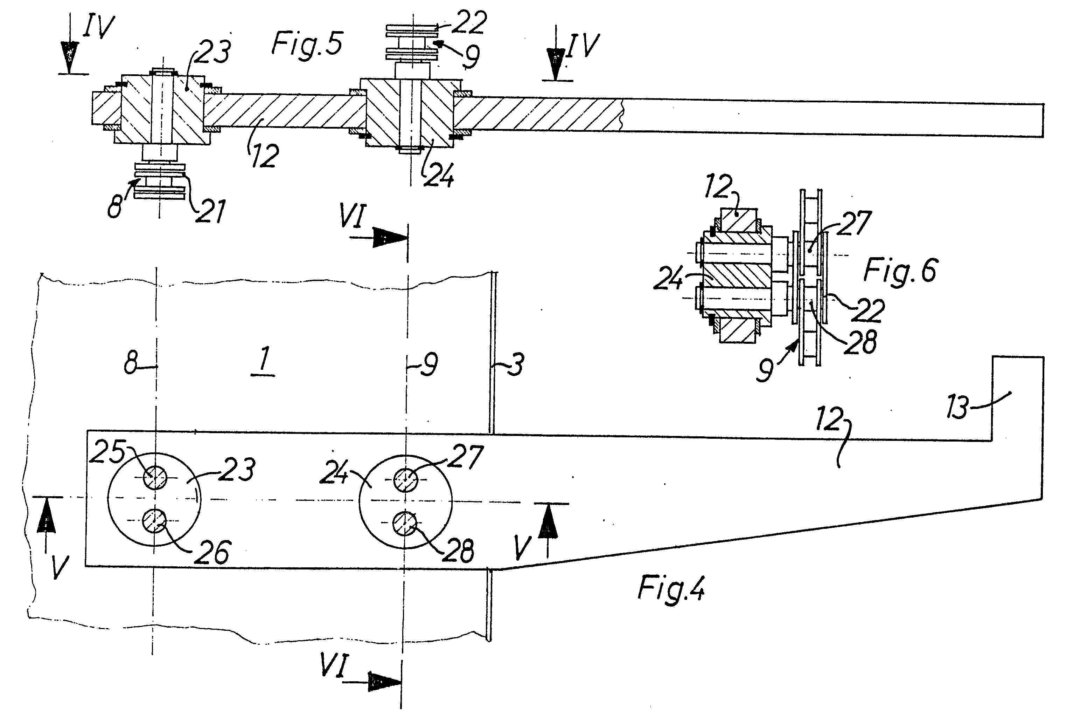

In Fig. 4ff ist eine bevorzugte Ausführungsform einer Verbindung zwischen den Mitnehmern 12 und den zugehörigen Ketten 8, 9 dargestellt. Dabei ist der Mitnehmer 12 mit je einem Glied 21, 22 beider parallel geführter Ketten 8 bzw. 9 über je ein Drehstück 23, 24 verbunden, das im Mitnehmer 12 drehbar und seitlich durch, Seegerringe unverschiebbar gelagert und mit beiden Bolzen 25, 26 bzw. 27, 28 des jeweiligen Kettengliedes 21 bzw. 22 starr verbunden ist. Durch diese Ausbildungsform wird eine Sichere, gelenkige Verbindung zwischen Kette 8, 9 und Mitnehmer 12 erzielt. Wenn ein Kettenglied 21, 22 einer Kette 8 bzw. 9 um ein Kettenrad 11 umgelenkt wird, so kann sich das Drehstück 23, 24 im Mitnehmer 12 drehen, ohne seitlich verschoben zu werden. Die Mitnehmer 12 bleiben folglich in der gewünschten horizontalen Lage.

In Fig. 4 ist eine alternative Ausführungsform eines Mitnehmers 12 mit am hinteren Ende angeordneten Festanschlages 13 dargestellt.

An den Stapelwagen 18 können Fotozellen 29 oder bauteile ähnlicher Funktion angeordnet sein, die zusammen mit einer nicht näher dargestellten elektronischen Steuervorrichtung das Absenken des Stapelwagens 18 in Abhängigkeit von der Höhe der Oberkante der vorher abgelegten Stapelreihe 16 steuern. Zum Zählen der Stückzahl je Stapelreihe 16 können elektronische Stückzahlenzähler 30 angebaut sein. Entsprechend können im Bereich der abgesenkt werdenden Stapelreihen 16 Lagenzähler 31 angebracht sein.

Die auf der Ablagefläche 14 gebildete Stapelreihe 16 kann in alternativer Arbeitsweise der Stapelvorrichtung auch auf den bereits ausgefahrenen Tragarm 19 aufgeschoben werden. Auch können zu beiden Seiten jedes Ständers 1 je ein Stapelwagen 18 mit Tragarm 19 angeordnet sein, die abwechselnd je eine stapelreihe 16 abwärts fördern. Als Rückhalter kann jeweils die Vorderwand 5 der Ständer 1 dienen.

In Fig. 1 ist mit gestrichelten Linien ein Ständer 1' mit seiner Vorderseite 5' dargestellt, der um den Abstand der Vorderseite 5 eines Ständers 1 von der Vorderseite 5' schmaler ausgebildet ist. Der Ständer 1' ist mit einem starren Auslegerarm 32 versehen, der über die Vorderseite 5' hinausragt und dessen Oberfläche sich in gleicher Ebene mit und in Verlängerung der Oberseite des Ständers 1' erstreckt. Somit wird eine Stapelreihe 16 mindestens teilweise auf dem Auslegerarm 32 vorgebildet. Das Abnehmen der Stapelreihe 16 mittels des oder der vertikal verfahrbaren Stapelwagen 18 mit Tragarmen 19 erfolgt in vorbeschriebener Weise.

**Patentansprüche**

1. Stapelvorrichtung für stab- oder brettförmiges Stückgut, mit an Ständern vertikal verfahrbaren Stapelwagen mit horizontal verfahrbaren Tragarmen und mit an umlaufenden Ketten parallel geführten, Anschläge aufweisenden Mitnehmern, die das Stückgut auf der Rückseite der Ständer aufnehmen, auf die Oberseite der Ständer befördern und dort auf einer Ablagefläche ablegen, dadurch gekennzeichnet,

a) dass die Länge der Ablagefläche (14) der Breite einer zu bildenden Stapelreihe (16) entspricht,

b) dass das abgelegte Stückgut (4) mittels der Festanschläge (13) auf der Ablagefläche (14) zu einer Stapelreihe (16) zusammengeschoben wird, wobei die Festanschläge (13) so geführt sind, dass diese am Anfang der Ablagefläche in die Ständer eintauchen, und

c) dass die Stapelwagen (18) mit eingefahrenen, über deren Oberkante hinausragenden Tragarmen (19) zum Abnehmen der Stapelreihe (16) unter die Ablagefläche (14) vertikal verfahrbar und mit der Stapelreihe (16) nach dem Ausfahren der Tragarme (19) absenkbar sind, um die Stapelreihe (16) durch Einziehen der Tragarme (19) abzusetzen.

2. Stapellvorrichtung nach Anspruch 1, dadurch gekennzeichnet, dass die Festanschläge (13) einstellbar auf den Mitnehmern (12) angeordnet sind.

3. Stapelvorrichtung nach Anspruch 1, dadurch gekennzeichnet, dass die Festanschläge (13) am hinteren Ende der Mitnehmer (12) angeordnet sind.

4. Stapelvorrichtung nach einem der Ansprüche 1 bis 3, dadurch gekennzeichnet, dass an jedem Ständer (1) ein zweiter Stapelwagen mit Tragarmen (19) im Gegentakt zum ersten Stapelwagen (18) vertikal verfahrbar ist, wobei die beiden Stapelwagen auf den gegenüberliegenden Seiten der Ständer (1) in Vertikalführungen geführt sind.

5. Stapelvorrichtung nach einem der vorangegangenen Ansprüche, dadurch gekennzeichnet, dass die Ablagefläche (14) mindestens teilweise durch einen starren Auslegerarm (32) gebildet ist, der über die Vorderseite (5') der Ständer (1') hinausragt und dessen Oberfläche sich in gleicher Ebene mit und in Verlängerung der Oberseite der Ständer (1') erstreckt.

6. Stapelvorrichtung nach einem der vorangegangenen Ansprüche, dadurch gekennzeichnet, dass ein Stückzahlenzähler (30) im Bereich der Ablagefläche (14) vorgesehen ist.

7. Stapelvorrichtung nach Anspruch 6, dadurch gekennzeichnet, dass die Einstellung des Stückzahlenzählers (30) auf die erforderliche Stückzahl je Stapelreihe (16) durch eine Messeinrichtung zur Bestimmung der Breite eines einzelnen stab - order brettförmigen Stückgutes (4) erfolgt.

8. Stapelvorrichtung nach einem der vorangegangenen Ansprüche, dadurch gekennzeichnet, dass im Bewegungsbereich der von den Stapelwagen (18) bzw. Tragarmen (19) transportierten Stapelreihen (16) ein Lagenzähler (31) angeordnet ist.

9. Stapelvorrichtung nach einem der vorangegangenen Ansprüche, dadurch gekennzeichnet, dass an den Stapelwagen (18) Rückhaltevorrichtungen (20) für die auf den Tragarmen (19) befindliche, abzulegende Stapelreihe (16) angeordnet sind.

10. Stapelvorrichtung nach einem der vorangegangenen Ansprüche, dadurch gekennzeichnet, dass an mindestens einem Stapelwagen (18) ein Sensorelement (29) zur Steuerung der Absenkbewegung der Stapelwagen (18) durch Abtasten der Oberkante der zuletzt abgesetzten Stapelreihe (16) angeordnet ist.

11. Stapelvorrichtung nach einem der Ansprüche 1 bis 3, dadurch gekennzeichnet, dass jeder Mitnehmer (12) mit je einem Glied (21, 22) zweier parallel geführter Ketten (8, 9) über Drehstücke (23, 24) verbunden ist, die im Mitnehmer (12) drehbar, aber seitlich unverschiebbar gelagert und mit beiden Bolzen (25-28) des jeweiligen Kettengliedes (21, 22) starr verbunden ist.

## Revendications

1. Dispositif d'empilage pour marchandises en vrac sous forme de barres ou de planches avec chariots empileurs à déplacement vertical sur des montants, les chariots étant équipés de bras-supports à déplacement horizontal et de pièces d'entraînement munies de butées fixes à guidage parallèle sur chaînes rotatives prenant en charge les pièces en vrac à l'arrière des montants, les transportant à la partie supérieure des montants et les déposant sur une surface de dépôt, ce dispositif d'empilage étant caractérisé en ce que

a) la longeur de la surface de dépôt (14) correspond à la largeur d'une rangée (16) à former;

b) les pièces en vrac (4) déposées sont poussées les unes contre les autres sur la surface de dépôt (14) au moyen de butées fixes (13) pour former ainsi une rangée (16), les butées fixes (13) étant guidées de manière à ce que celles-ci plongent dans les montants au début de la surface de dépôt, et

c) les chariots d'empilage (18) avec leurs bras-supports (19) rentrés et dépassant l'arête supérieure des chariots (18) sont verticalement déplaçables pour assurer la prise en charge de la rangée (16) sous la surface de dépôt (14), et abaissables avec la rangée (16) après sortie des bras-supports (19) pour déposer la rangée (16) par rétraction des bras-supports.

2. Dispositif d'empilage suivant revendication 1, caractérisé en ce que les butées fixes (13) installées sur les pièces d'entraînement (12) sont réglables.

3. Dispositif d'empilage suivant revendication 1, caractérisé en ce que les butées fixes (13) sont montées sur l'extrémité arrière des pièces d'entraînement (12).

4. Dispositif d'empilage suivant l'une des revendications 1 à 3, caractérisé en ce que chaque montant (1) est équipé d'un second chariot d'empilage à déplacement vertical avec bras-support (19) en "push-pull" par rapport au premier chariot d'empilage (18), et en ce que les deux chariots d'empilage sont guidés dans des guidages verticaux sur les côtés opposés des montants (1).

5. Dispositif d'empilage suivant l'une des revendications mentionnées ci-dessus, caractérisé en ce que la surface de dépôt (14) est formée — au moins partiellement — par une potence rigide (32) allant au-delà de la face (5') des montants (1') et dont la surface se trouve dans le même plan que le côté supérieur et la prolongation des montants (1').

6. Dispositif d'empilage suivant l'une des revendications indiquées ci-dessus, caractérisé en ce qu'un compte-pieces (30) est prévu au niveau de la surface de dépôt (14).

7. Dispositif d'empilage suivant revendication 6, caractérisé en ce que le réglage du compte-pièces (30) sur le nombre requis par rangée (16) est effectué par un dispositif de mesure qui détermine la largeur d'une pièce en forme de barre ou de planche (4).

8. Dispositif d'empilage suivant l'une des revendications mentionnées ci-dessus, caractérisé en ce qu'in compte-couches (31) est installé au niveau de la zone de passage des rangées (16) transportées par les chariots d'empilage (18) ou des bras-supports (19).

9. Dispositif d'empilage suivant l'une des revendications mentionnées ci-dessus, caractérisé en ce que les chariots d'empilage (18) sont équipés de dispositifs de retenue (20) des rangées (16) se trouvant sur les bras-supports (19) et devant être déposées.

10. Dispositif d'empilage suivant l'une des revendications mentionnées ci-dessus, caractérisé en ce qu'au moins l'un des chariots d'empilage (18) est équipé d'un élément détecteur (29) destiné à commander la descente des chariots d'empilage (18) en suivant l'arête supérieure de la dernière rangée (16) déposée.

11. Dispositif d'empilage suivant l'une des revendications 1 à 3, caractérisé en ce que chaque pièce d'entraînement est reliée rigidement à un maillon (21, 22) de deux chaînes à guidage parallèle (8, 9) par l'intermédiaire d'éléments rotatifs (23, 24) articulés, mais imbougeables latéralement, ainsi qu'à deux boulons (25- 28) de chacun des maillons (21, 22).

## Claims

1. Stacking device for bar- and board-shaped piece goods, with stacking carriages which are vertically movable on uprights, stacking truck with horizontally movable supporting arms and with rotating chain parallel guided followers with stops, which carry the piece goods on the back of the uprights, which convey them to the upright top and which let them down there on a storing surface characterized in that:

a) the length of the storing surface (14) corresponds to the width of a pile row (16) to be formed,

b) the set down piece goods (4) are pushed together to form a pile row (16) on the storing surface (14) by means of stationary stops (13), these stops (13) being guided in such a manner that they are plunged into the uprights at the beginning of the storing surface, and

c) the stacking carriages (18) are vertically movable with retracted supporting arms (19) that are projected beyond the carriage top edge to take off the pile row (16) below the storing surface (14), and can be lowered with the pile row (16) after having extended the supporting arms (19) to put down the pile row (16) by retracting the supporting arms (19).

2. Stacking device according to Claim 1, characterized in that the stationary stops (13) are installed on the followers (12) and can be adjusted.

3. Stacking device according to Claim 1, characterized in that the stationary stops (13) are installed at the further end of the followers (12).

4. Stacking device according to one of the Claims 1 to 3, characterized in that each upright (1) is equipped with a second vertically movable stacking carriage with supporting arms (19) in push-pull arrangement in relation to the first stacking carriage (18), both stacking carriages being guided in vertical guides at the opposite ends of upright (1).

5. Stacking device according to one of the above-mentioned Claims, characterized in that the storing surface (14) is formed at least partially by a rigid jib (32) which projects beyond the face (5') of the uprights (1') and the surface of which flushes with the upper side of the uprights (1') and its extension.

6. Stacking device according to one of the aforementioned Claims, characterized in that a batch counter (30) is installed in the storing surface area (14).

7. Stacking device according to Claim 6, characterized in that the batch counter (30) can be adjusted to the required number of pieces per pile row (16) by means of a measuring device which determines the width of a single bar- or board-shaped piece (4).

8. Stacking device according to one of the aforementioned Claims, characterized in that a layer counter (31) is installed within the motional field of the pile rows (16) conveyed by the stacking carriages (18) or the supporting arms (19).

9. Stacking device according to one of the aforementioned Claims, characterized in that preventer mechanisms (20) are installed on the stacking carriages (18) for securing the pile rows (16) resting on the supporting arms (19) and to be put down.

10. Stacking device according to one of the aforementioned Claims, characterized in that at least one of the stacking carriages (18) is equipped with a sensor element (29) which controls the lowering of the stacking carriages (18) by following the upper edge of the last pile row (16) laid down.

11. Stacking device according to one of the Claims 1 to 3, characterized in that each follower (12) is connected with one link each (21, 22) of two parallel guided chains (8, 9) via swivels (23, 24) which are pivoted (laterally immovable) on the follower (12), and rigidly connected with both bolts (25-28) of the respective chain link (21, 22).

*Fig.1*

*Fig.2*

Fig. 3

a    b    c    d    e    f

0 000 708

IV

23  Fig.5  22
9

IV

12

8  21  24

VI

12

27

24  Fig.6

22
28

9

8  1  9  3

3

25  23  24  27

12  13

26  28

V  VI  V

Fig.4

0 000 708